# EUROPÄISCHE PATENTSCHRIFT

(11) **EP 2 670 238 B1**
(45) Veröffentlichungstag und Bekanntmachung des Hinweises auf die Patenterteilung: **26.10.2016**
(21) Anmeldenummer: 12703447.8
(22) Anmeldetag: 01.02.2012
(51) Int. Cl.: A01N 1/02, F25D 3/10, F25D 13/00, F25D 29/00, A41D 13/005, E04H 9/14

(54) **KÜHLANLAGE, INSBESONDERE ZUR KRYOKONSERVIERUNG BIOLOGISCHER PROBEN, MIT EINRICHTUNGEN FÜR DEN FALL EINER HAVARIE**
COOLING SYSTEM, ESPECIALLY FOR CRYOPRESERVING BIOLOGICAL SAMPLES, COMPRISING DEVICES FOR USE IN CASE OF AN EMERGENCY
INSTALLATION FRIGORIFIQUE DESTINÉE NOTAMMENT À LA CRYOCONSERVATION D'ÉCHANTILLONS BIOLOGIQUES, ÉQUIPÉE DE DISPOSITIFS POUR UN CAS D'AVARIE

(30) Priorität: 02.02.2011 DE 102011010120
(43) Veröffentlichungstag der Anmeldung: 11.12.2013
(73) Patentinhaber: Fraunhofer-Gesellschaft zur Förderung der angewandten Forschung e.V., 80686 München (DE)
(72) Erfinder: FUHR, Günter, R., 13187 Berlin (DE); ZIMMERMANN, Heiko, 60596 Frankfurt (DE)
(74) Vertreter: Hertz, Oliver
(86) Internationale Anmeldenummer: PCT/EP2012/000450
(87) Internationale Veröffentlichungsnummer: WO 2012/104079

(56) Entgegenhaltungen:
- EP-A1- 1 639 892
- EP-B1- 1 252 471
- WO-A2-2005/010499
- DE-A1- 2 019 882
- DE-A1- 3 028 707
- DE-A1- 3 441 091
- DE-A1- 19 716 913
- GB-A- 1 305 706
- US-A- 5 327 731
- US-A- 5 630 296
- US-A1- 2006 041 994
- US-B1- 6 415 453

## Beschreibung

Die Erfindung betrifft eine Kühlanlage, insbesondere zur Kryokonservierung biologischer Proben, die einen mit flüssigem Stickstoff (LN₂) gekühlten Kühlraum aufweist. Die Erfindung betrifft des Weiteren Verfahren zum Betrieb der Kühlanlage bei einer Havarie. Anwendungen der Erfindung sind bei der Langzeitlagerung von Proben im gekühlten Zustand, insbesondere bei der Kryokonservierung biologischer Proben, gegeben.

Es ist bekannt, biologische Proben für Konservierungszwecke im gefrorenen Zustand in einer Kühlanlage, z. B. in einer Kryobank, zu lagern (Kryokonservierung). Kryobanken werden typischerweise bei Temperaturen unter -80°C, insbesondere einer Temperatur unter der Umkristallisierungstemperatur von Wassereis (-138°C), betrieben. Sie enthalten ein Kühlmittelreservoir mit flüssigem Stickstoff (Temperatur: rd. - 195°C) und eine Vielzahl einzelner Tanks (so genannte Kryotanks, meist Dewar-Gefäße aus doppelwandigem Stahl) von der Größe einiger Liter bis zu rd. 2 oder 3 Kubikmetern. Die Kryotanks stehen in Räumen bei Normaltemperatur (Raumtemperatur) und werden aus dem Kühlmittelreservoir mit dem flüssigen Stickstoff versorgt. In den Kryotanks sind in Regalen Boxen angeordnet, in denen Röhrchen, Beutel oder andere geschlossene Behältnisse mit den Proben (z. B. Flüssigkeiten, Zellen, Zellbestandteile, Seren, Blut, Zellsuspensionen, Gewebestücke o. ä.) gelagert sind. Die Proben können komplett im flüssigen Stickstoff angeordnet sein. Zur Vermeidung einer Probenkontamination durch den flüssigen Stickstoff werden die Proben jedoch meistens in einer kühlen Gasphase im Dampf des flüssigen Stickstoffs bei etwa -145°C gelagert. Diese Gasphase wird oberhalb eines Stickstoffsees am Boden des Kryotanks gebildet.

Die herkömmlichen Kryotanks haben zwar eine hohe Betriebssicherheit im Normalbetrieb. Solange die Versorgung mit dem flüssigen Stickstoff aufrecht erhalten wird, ist die sichere Lagerung der Proben gewährleistet. Falls jedoch bei einer Havarie die Stickstoff-Versorgung unterbrochen wird oder das Vakuum im Dewar-Gefäß bricht, müssen die Proben in einen anderen Kryotank übertragen werden. Bei dieser Übertragung besteht, speziell wenn viele Kryotanks betroffen sind, eine hohe Gefahr, dass Proben unerwünscht erwärmt werden. Noch kritischer sind Havariesituationen in Folge eines Brands oder Wassereinbruchs.

Herkömmliche Kryobanken mit einzelnen Kryotanks haben jedoch Nachteile, wenn große Probenmengen, wie zum Beispiel zehntausend bis zu einer Millionen oder mehr Proben kryokonserviert werden sollen. Es treten Beschränkungen für die Effektivität des Kryotank-Betriebs, für die Bereitstellung konstanter Kühlbedingungen und für die Automatisierung beim Betrieb der Kryobank, insbesondere der Probenhandhabung auf. Zur Überwindung dieser Beschränkungen besteht das Interesse, die herkömmlichen Kryotanks durch größere Lagereinheiten zu ersetzen, wie sie zum Beispiel zur Lagerung von Lebensmitteln verwendet werden. Es sind zwar Kühlräume bekannt, die eine effektive Lagerung von Lebensmitteln und eine Automatisierung ermöglichen. Die herkömmlichen Kühlräume sind jedoch wegen deren Betriebstemperatur in einem Bereich oberhalb von - 50°C für die dauerhafte Kryokonservierung biologischer Proben ungeeignet.

Eine ausgedehnte Kühlanlage, die für die Kryokonservierung biologischer Proben geeignet ist, wird von den Erfindern der vorliegenden Erfindung in einer weiteren Patentanmeldung (unveröffentlicht am Prioritätstag der vorliegenden Erfindung) beschrieben. Die Kühlanlage umfasst einen Kühlraum, der von einem Bodenbereich, Seitenwänden und einem Deckenbereich begrenzt wird, und eine Kühleinrichtung, die zur Kühlung des Kühlraums mit flüssigem Stickstoff vorgesehen ist. Auch wenn die Kryokonservierung in einem ausgedehnten Kühlraum Vorteile im Bezug auf die Effektivität der Kühlung und die Automatisierung der Probenhandhabung bietet, bestehen im Unterschied zum herkömmlichen Kryotank erhöhte Risiken bei einer Havarie. Beispielsweise können bei Ausfall der Kühleinrichtung die Proben nicht so schnell aus dem Kühlraum entfernt werden, wie aus einem Kryotank. Besondere Maßnahmen zur Entfernung von Kühlgut sind auch nicht von den herkömmlichen Kühlräumen zur Lebensmittellagerung bekannt.

Ein weiteres Problem beim Betrieb von Kühlräumen besteht in Bezug auf den Schutz von Bedienpersonen, die sich im Kühlraum aufhalten. Es sind keine Maßnahmen zum Schutz einer Bedienperson bei einer Havarie bekannt, bei der die Bedienperson im Kühlraum lebensbedrohlichen Bedingungen ausgesetzt ist.

Aus EP 1 252 471 B1, EP 1 639 892 A1, DE 10 2007 015 390 A1, US 4 576 010 A, US 4 060 400 A, US 3 287 925 A, US 3 385 073 A und US 3 127 755 A sind Kühlfahrzeuge beziehungsweise Kühlanlagen mit Flüssigstickstoffkühlung bekannt, deren Kühlraum jeweils eine Türöffnung mit einer Tür für einen Zugriff auf das Kühlgut aufweist. Diese Kühlfahrzeuge sind für die Kryokonservierung biologischer Proben unpraktikabel, da die Türöffnung das Einströmen von Umgebungsluft ermöglicht, was ein Vereisen des Inneren des Kühlraums ergibt.

Weitere Kühlanlagen für biologische Proben sind aus DE 34 41 091 A1, DE 197 16 913 A1, US 5 327 731 A und WO 2005/010499 A2 bekannt.

Die Offenlegungsschrift DE 197 16 913 A1 offenbart eine Kühlanlage, welche die Merkmale des Oberbegriffs des Anspruchs 1 umfasst.

Die Aufgabe der Erfindung ist es, eine verbesserte Kühlanlage, insbesondere zur Kryokonservierung biologischer Proben, bereitzustellen, mit der Nachteile und Beschränkungen herkömmlicher Kühlanlagen überwunden werden. Die Kühlanlage soll insbesondere einen Schutz einer Bedienperson bei einer Havarie ermöglichen. Die Aufgabe der Erfindung ist es auch, ein verbessertes Verfahren zum Betrieb einer Kühlanlage, insbesondere zur Kryokonservierung von biologischen Proben bereitzustellen, mit dem Nachteile und Beschränkungen herkömmlicher Verfahren bei einer Havarie überwunden werden.

Diese Aufgaben werden durch Kühlanlagen und Verfahren zu deren Betrieb mit den Merkmalen der unabhängigen Ansprüche gelöst. Vorteilhafte Ausführungsformen und Anwendungen der Erfindung ergeben sich aus den abhängigen Ansprüchen.

Gemäß einem ersten Gesichtspunkt wird eine Kühlanlage, insbesondere zur Kryokonservierung biologischer Proben, bereitgestellt, die einen Kühlraum und eine Kühleinrichtung aufweist, die zur Kühlung des Kühlraums unter Verwendung von flüssigem Stickstoff eingerichtet ist. Der Kühlraum ist allgemein ein von einem Bodenbereich, Seitenwänden und einem Deckenbereich eingeschlossener Raum, der in seiner Gesamtheit mit der Kühleinrichtung gekühlt wird und für die Aufnahme der zu konservierenden Proben eingerichtet ist. Der Kühlraum ist vorzugsweise ortsfest und unbeweglich angeordnet. Er ist besonders bevorzugt konfiguriert, unmittelbar durch flüssigen Stickstoff oder Dampf des flüssigen Stickstoffs gekühlt zu werden. Mindestens eine der Seitenwände enthält mindestens ein Wandelement, das relativ zu der jeweiligen Seitenwand bewegt werden kann.

Das mindestens eine Wandelement ist so konfiguriert, dass mit einer Bewegung des Wandelements relativ zu der Seitenwand in der Seitenwand eine Wandöffnung gebildet werden kann. Das Wandelement ist ein Teil der Seitenwand. Eine Bewegung des Wandelements bedeutet insbesondere, dass das Wandelement von einem geschlossenem Zustand, in dem die Seitenwand mit dem Wandelement vollständig geschlossen ist, in einen geöffneten Zustand bewegt werden kann, in dem die Seitenwand an der Wandöffnung unterbrochen ist. Vorteilhafterweise ermöglicht das mindestens eine Wandelement eine Notöffnung des Kühlraums für eine schnelle Entfernung von Proben (Evakuierung) und/oder Personen aus dem Kühlraum bei einer Havarie.

Das Wandelement kann instantan, das heißt ohne eine den Zustand der kryokonservierten Proben beeinträchtigenden Verzögerung, relativ zu der Seitenwand bewegt werden, um die Wandöffnung zu bilden. Im Unterschied zum herkömmlichen Kryotank, bei dem ein Probenzugriff nur von oben durch einen Tankdeckel vorgesehen ist, ermöglicht das mindestens eine Wandelement einen seitlichen Zugriff auf Proben im Kühlraum. Vorteilhafterweise kann damit die Evakuierung von Proben erheblich beschleunigt werden. Im Unterschied zu einem herkömmlichen Kühlraum für Lebensmittel stellt das mindestens eine Wandelement keine Tür, die für den regulären Probenzugriff vorgesehen ist, sondern einen Teilbereich der Wand dar. Vorteilhafterweise wird damit die Bildung einer unerwünschten Wärmesenke im Kühlraum vermieden.

Gemäß einem zweiten Gesichtspunkt wird ein Verfahren zum Betrieb der Kühlanlage gemäß obigem ersten Gesichtspunkt der Erfindung bereitgestellt, bei dem nach Erfassung eines Havariezustands der Kühlanlage auf eine Bedienperson und/oder Proben im Kühlraum eingewirkt wird, bis deren Umgebungsbedingungen einem gewünschten Normzustand entsprechen. Der Havariezustand ist gegeben, wenn die Bedienperson und/oder die Proben im Kühlraum mit Betriebsbedingungen ausgesetzt sind, die von einem vorgegebenen Normzustand abweichen. Offenbarungsgemäß wird der Zustand der Bedienperson und/oder der Proben und der Verwendung von einzelnen oder mehreren Schutzmaßnahmen der Kühlanlage für den Havariefall verändert, bis die Umgebungsbedingungen der Bedienperson und/oder der Proben dem Normzustand entsprechen.

Im Fall der Bedienperson umfassen die Betriebsbedingungen zum Beispiel die Temperatur und/oder den Sauerstoffanteil im Inneren eines Schutzanzugs der Bedienperson und/oder die Funktionstüchtigkeit von mechanischen Komponenten des Schutzanzugs, wie zum Beispiel Gelenken. Der Normzustand zeichnet sich für die Bedienperson zum Beispiel durch eine Temperatur oberhalb von 0°C und die Bereitstellung von atembarer Luft in der unmittelbaren Umgebung der Bedienperson und für den Schutzanzug durch die Beweglichkeit der Gelenke aus.

In Bezug auf die Proben umfassen die Betriebsbedingungen die Temperatur und/oder das Vorhandensein unerwünschter Substanzen im Kühlraum. Der Normzustand zeichnet sich für die Proben zum Beispiel durch eine Temperatur unterhalb von -138°C und/oder die Trockenheit der Atmosphäre im Kühlraum aus.

Der Kühlraum ist so dimensioniert, dass mindestens eine Bedienperson sich im Kühlraum aufhalten und bewegen kann. Das Innenvolumen des Kühlraums ist so gewählt, dass die mindestens eine Bedienperson vollständig in den Kühlraum passt und in diesem stehen und/oder laufen kann. Vorzugsweise beträgt das Innenvolumen mindestens 10 m³, insbesondere mindestens 100 m³, wie z. B. mindestens 500 m³, oder sogar 1000 m³ oder mehr.

Der Kühlraum der Kühlanlage ist zur Aufnahme einer Probenaufnahmeeinrichtung eingerichtet. Als Probenaufnahmeeinrichtung ist jede Haltestruktur verwendbar, die zur Aufnahme von Proben, insbesondere von Probengefäßen mit biologischen Proben, geeignet ist. Probengefäße umfassen z. B. Reagenzgläser, Röhrchen, Kapillaren, so genannte "Straws", Beutel oder andere geschlossene Behältnisse. Die Probenaufnahmeeinrichtung kann im Kühlraum dauerhaft angeordnet (insbesondere fixiert) oder zumindest in Teilen lösbar angeordnet sein. Der Kühlraum ist vorzugsweise so dimensioniert, dass die Bedienperson sich in dem mit der Probenaufnahmeeinrichtung ausgestatteten Kühlraum aufhalten und bewegen kann.

Die mindestens eine Seitenwand und das mindestens eine Wandelement, das in der jeweiligen Seitenwand vorgesehen ist, haben in Dickenrichtung der Seitenwand den gleichen Aufbau. Das Wandelement bildet ein Wandmodul, das mit einer Formpassung oder über eine Sollbruchstelle mit der umgebenden Seitenwand verbunden ist. Der modulare Aufbau der Seitenwand mit dem Wandelement hat den Vorteil, dass die thermischen Eigenschaften entlang der Seitenwand im Wesentlichen konstant sind, so dass die Bildung einer Wärmesenke vermieden wird.

Gemäß einer vorteilhaften Ausführungsform ist das mindestens eine Wandelement senkrecht relativ zur Flächenausdehnung der jeweiligen Seitenwand verschiebbar. Das Wandelement kann in einer Richtung parallel zur Dickenrichtung der Seitenwand bewegt werden. In diesem Fall kann die Wandöffnung besonders einfach geschaffen werden, indem das Wandelement von außen in das Innere des Kühlraums oder von innen in die Umgebung der Kühlanlage verschoben wird.

Von Vorteil ist es des weiteren, wenn das Wandelement manuell beweglich, insbesondere manuell relativ zur Seitenwand verschiebbar ist. In diesem Fall kann eine menschliche Bedienperson unter Ausübung ihrer Körperkraft die Wandöffnung erzeugen. Der Einsatz von zusätzlichen mechanischen Werkzeugen ist nicht zwingend erforderlich.

Besonders bevorzugt ist eine Variante, bei der das Wandelement von der Seitenwand vollständig trennbar ist. Dies ermöglicht einen vereinfachten Zugriff auf die Wandöffnung von beiden Seiten der jeweiligen Seitenwand her.

Die Evakuierung des Kühlraums kann vorteilhafterweise vereinfacht werden, wenn mindestens eine der folgenden Maßnahmen an der Kühlanlage vorgesehen ist. Gemäß einer ersten Variante kann an der Außenseite der mindestens einen Seitenwand, die das mindestens eine Wandelement aufweist, eine Andockeinrichtung für einen Evakuierungscontainer vorgesehen sein. Die Andockeinrichtung ist auf der Außenseite der jeweiligen Seitenwand so positioniert, dass ein mit der Andockeinrichtung gekoppelter Evakuierungscontainer an das Wandelement bzw. die Wandöffnung in der Seitenwand angrenzend angeordnet ist. Die Andockeinrichtung umfasst zum Beispiel einen Rahmen, der auf der Außenseite der Seitenwand das Wandelement oder die Wandöffnung umgibt und für die Ankopplung des Evakuierungscontainers eingerichtet ist. Vorzugsweise ist die Andockeinrichtung für eine thermisch isolierte und in Bezug auf eine Umgebung der Kühlanlage gasdichte Verbindung des Kühlraums mit dem angekoppelten Evakuierungscontainer konfiguriert. Alternativ oder zusätzlich ist auf der Außenseite der mindestens einen Seitenwand mit dem mindestens einen Wandelement eine Rampe vorgesehen. Die Rampe umfasst einen Träger, der von der Unterkante des Wandelements oder der Wandöffnung in der Seitenwand zu einem Boden in der Umgebung der Kühlanlage führt. Vorteilhafterweise wird durch die Rampe die Evakuierung von Proben aus dem Kühlraum erleichtert.

Gemäß der Erfindung ist im Kühlraum eine Schutzeinrichtung vorgesehen, mit der eine lokale Schutzatmosphäre in einer Umgebung einer Bedienperson im Kühlraum erzeugt werden kann. Die Schutzeinrichtung kann auch bei einer Kühlanlage mit einem Kühlraum und einer Kühleinrichtung zur Kühlung des Kühlraums mit flüssigem Stickstoff vorgesehen sein, ohne dass mindestens eine der Seitenwände des Kühlraums mit dem Wandelement ausgestattet ist. Vorteilhafterweise ermöglicht die Schutzeinrichtung, dass eine Bedienperson im Havariefall vor lebensbedrohlichen Umgebungsbedingungen, insbesondere vor einer Unterkühlung oder einem Sauerstoffmangel geschützt werden kann.

Gemäß einer ersten Alternative umfasst die Schutzeinrichtung eine im Kühlraum bewegliche Haube, die mit einem externen Belüftungssystem koppelbar ist. Mit dem externen Belüftungssystem kann das Innere der Haube mit erwärmter Luft beaufschlagt werden. Die Haube ist vorzugsweise aus einem bei der Betriebstemperatur im Kühlraum flexiblen Material, wie zum Beispiel einer Metallfolie hergestellt. Gemäß einer zweiten Alternative umfasst die Schutzeinrichtung bewegliche, in das Innere des Kühlraums verschiebbare Zwischenwände, mit denen eine Kammer im Bezug auf den übrigen Kühlraum abgegrenzt werden kann. Auch in diesem Fall ist ein externes Belüftungssystem vorgesehen, mit dem das Innere der Kammer mit erwärmter Luft beaufschlagt werden kann. Bei einer Havarie kann einer Bedienperson im Kühlraum geholfen werden, indem die Bedienperson mit der Haube bedeckt oder um die Bedienperson die Kammer mit den verschiebbaren Zwischenwänden gebildet und das Innere der Haube oder der Kammer mit erwärmter Luft beaufschlagt wird.

Gemäß einer weiteren Variante kann die Schutzeinrichtung mit einer Isoliermatte, zum Beispiel aus einem Kunststoffmaterial, ausgestattet sein, mit der die Bedienperson gegenüber dem Bodenbereich thermisch isoliert werden kann.

Gemäß einem weiteren vorteilhaften Merkmal kann der Kühlraum mit einer Alarmeinrichtung ausgestattet sein, die zur Erzeugung eines Alarms in Reaktion auf einen unautorisierten Zugriff auf das Innere des Kühlraums konfiguriert ist. Vorteilhafterweise kann damit ein Schutz der Proben vereinfacht werden.

Eine Havarie einer Kühlanlage kann auch gegeben sein, wenn sich die Bedingungen in der Umgebung der Kühlanlage in unerwünschter Weise ändern. Beispielsweise kann eine unerwünschte Beaufschlagung der Kühlanlage mit Wasser von unten oder von oben auftreten. Um die Proben in diesem Fall zu schützen, ist die Kühlanlage mit einer Hubeinrichtung und/oder mit einer äußeren Hülleneinrichtung ausgestattet. Die Hubeinrichtung und die Hülleneinrichtung können auch an einer Kühlanlage mit einem Kühlraum und einer mit flüssigem Stickstoff arbeiten Kühleinrichtung vorgesehen sein, bei der keine der Seitenwände für die Bildung einer Wandöffnung durch ein veränderliches Wandelement eingerichtet ist.

Die Hubeinrichtung ist dafür konfiguriert, eine Betriebshöhe des Kühlraums oder von dessen Teilen, z. B. einzelnen Kammern, und ggf. der Kühleinrichtung relativ zu einem Boden in der Umgebung der Kühlanlage zu ändern. Vorteilhafterweise kann bei Hochwasser der Kühlraum über den Hochwasserpegel angehoben werden. Vorzugsweise umfasst die Hubeinrichtung hierzu einen Kran und/oder einen hydraulisch betriebenen Träger. Die Hülleneinrichtung ist zur Erzeugung einer Anlagen-Schutzatmosphäre konfiguriert, welche die vollständige Kühlanlage, insbesondere den vollständigen Kühlraum umgibt. Vorzugsweise umfasst die Hülleneinrichtung eine flexible Folie, zum Beispiel aus Kunststoff, mit der die Kühlanlage oder mindestens der Kühlraum gegenüber von oben eindringendem Wasser geschützt werden kann.

Weitere Vorteile und Einzelheiten der Erfindung werden aus der folgenden Beschreibung der beigefügten Zeichnungen ersichtlich. Es zeigen:
- Figur 1:: eine schematische Querschnittsansicht einer bevorzugten Ausführungsform der erfindungsgemäßen Kühlanlage;
- Figur 2:: eine schematische Querschnittsansicht der Kühlanlage gemäß Figur 1 mit einem angekoppelten Evakuierungscontainer;
- Figur 3:: eine schematische Querschnittsansicht der Kühlanlage gemäß Figur 1 mit einer zur Evakuierung des Kühlraums vorgesehenen Rampe;
- Figuren 4 und 5:: schematische Querschnittsansichten der Kühlanlage gemäß Figur 1 mit einer Illustration der Rettung einer Bedienperson mit einer Schutzeinrichtung in Form einer Haube;
- Figur 6:: eine schematische Perspektivansicht eines Kühlraums mit verschiebbaren Wänden zur Bildung einer Schutzeinrichtung in Form einer Kammer;
- Figur 7:: eine schematische Querschnittsansicht von Merkmalen einer Hubeinrichtung; und
- Figur 8:: eine schematische Querschnittsansicht von Merkmalen einer Hülleneinrichtung.

Bevorzugte Ausführungsformen der erfindungsgemäßen Kühlanlage und des Verfahrens zu deren Betrieb werden im Folgenden unter beispielhaftem Bezug auf eine Kühlanlage mit einem Kühlraum beschrieben, der so dimensioniert ist, dass eine Bedienperson im Kühlraum mehrere Schritte laufen kann. Die Realisierung der Erfindung ist nicht auf die beispielhaft gezeigte Kühlraum-Größe beschränkt, sondern entsprechend auch mit erheblich größeren Kühlräumen (Hallen) oder auch mit kleineren Kühlräumen möglich. Ausführungsformen der Erfindung werden insbesondere unter Bezug auf Maßnahmen an der erfindungsgemäßen Kühlanlage zum Schutz von Proben oder Bedienpersonen bei einer Havarie und die Verfahren zum Betrieb der Kühlanlagen bei der Havarie beschrieben. Einzelheiten der Kryokonservierung biologischer Proben, wie z.B. die Probenvorbereitung oder die Realisierung bestimmter Kühlprotokolle oder die Ablage der Proben gemeinsam mit gespeicherten Probendaten können mit der erfindungsgemäßen Kühlanlage realisiert werden, wie dies an sich aus dem Stand der Technik bekannt ist.

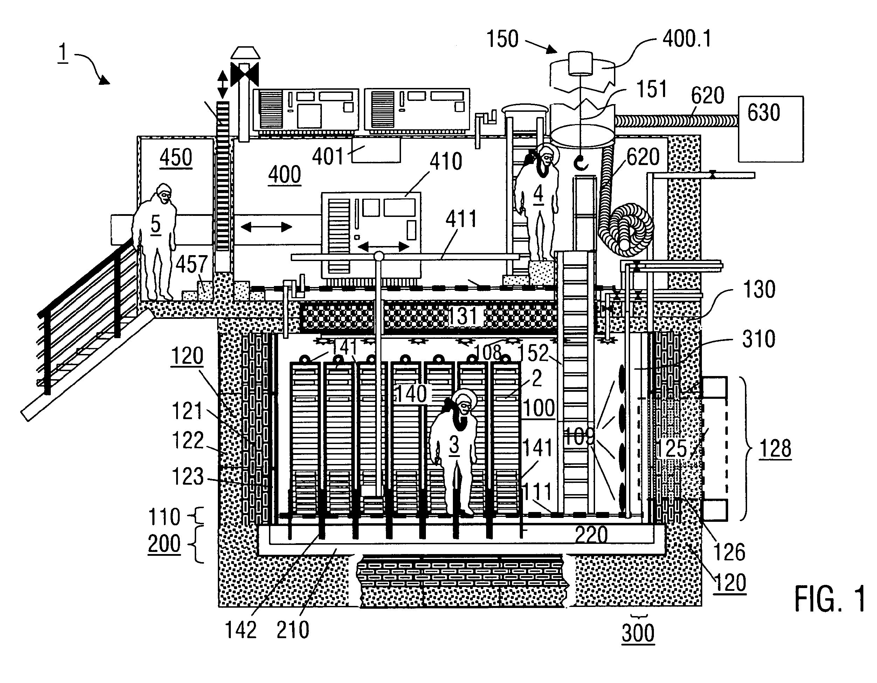

Figur 1 zeigt eine Ausführungsform der erfindungsgemäßen Kühlanlage 1 in schematischer Querschnittsansicht mit einem Kühlraum 100, einer ersten Kühleinrichtung 200, einer zweiten Kühleinrichtung 300 und einem Betriebsraum 400. Der Kühlraum 100 wird nach unten durch einen Bodenbereich 110, seitlich durch Seitenwände 120 und nach oben durch einen Deckenbereich 130 begrenzt. Das Innenvolumen des Kühlraums 100 beträgt z.B. 10 m · 5 m · 3 m. Im Kühlraum 100 ist auf dem Bodenbereich 110 stehend und an die Seitenwände 120 angrenzend eine Probenaufnahmeeinrichtung 140 mit Regalen 141 angeordnet.

Der Bodenbereich 110 umfasst eine Plattform 111, die sich über der ersten Kühleinrichtung 200 mit einer Wanne 210 erstreckt. Die Wanne 210 hat einen doppelwandigen Wannenkörper mit einem evakuierten Innenraum und auf ihrer äußeren Seite eine thermische Isolation. Die thermische Isolation ist wie die Seitenwände 120 aufgebaut. Alternativ oder zusätzlich ist die Wanne mit einem Infrarot-verspiegelten Vakuumbereich isoliert. Bei Betrieb der Kühlanlage 1 befindet sich in der Wanne 210 flüssiger Stickstoff 220. Der flüssige Stickstoff 220 hat vorzugsweise eine zum Bodenbereich 110 hin freie Oberfläche. Es wird ein Stickstoffsee gebildet. Die Befüllung der Wanne 210 und die Aufrechterhaltung des Reservoirs flüssigen Stickstoffs 220 während des Betriebs der Kühlanlage 1 erfolgt unter Verwendung einer Kühlmittelzufuhr (nicht dargestellt).

Die Plattform 111 umfasst ein Gitter, z.B. aus Stahl, das sich über die Wanne 210 erstreckt und mit Trittpodesten ausgestattet ist. Die Trittpodeste verringern einen eventuellen mechanischen Kontakt zwischen einer Bedienperson 3 und der Plattform 111, so dass ein Wärmefluss von der Bedienperson 3 zur Plattform 111 minimiert wird. Da die Plattform 111 einen Trägerbereich für die Bedienperson 3 und auch die Probenaufnahmeeinrichtung bildet, kann die Plattform 111 durch zusätzliche Bauelemente (nicht dargestellt) mechanisch in der Wanne 210 abgestützt werden.

Die zweite Kühleinrichtung 300 ist an mindestens einer der Seitenwände 120 vorgesehen, insbesondere auf deren nach innen weisenden Oberfläche angeordnet oder in dieser eingebettet. Die zweite Kühleinrichtung 300 ist für eine elektrische Kühlung konfiguriert. Sie umfasst Kühlelemente 310, die mit Kühlaggregaten (nicht dargestellt) verbunden sind. Die Kühlaggregate befinden sich außerhalb des Kühlraums 100, vorzugsweise oberhalb von diesem. Mit der zweiten Kühleinrichtung 300 kann z.B. eine elektrische Kühlung auf eine Temperatur von -150°C vorgesehen sein. Gemäß alternativen Varianten kann die zweite Kühleinrichtung 300 ersatzweise durch eine Stickstoffkühlung oder eine Kühlung mit flüssigem Helium gebildet sein.

Bei Betrieb der Kühlanlage 1 wird z. B. die erste Kühleinrichtung als Hauptkühlung und die zweite Kühleinrichtung als sekundäres Sicherheitskühlsystem im Kühlraum verwendet. Alternativ können umgekehrt die zweite Kühleinrichtung die Hauptkühlung und die erste Kühleinrichtung das sekundäre Sicherheitskühlsystem bilden.

Die Probenaufnahmeeinrichtung 140 umfasst Regale 141 (so genannte "cryo racks"), in denen sich biologische Proben 2 in Probenbehältern befinden. Die Regale 141 haben Gestelle aus thermisch gut leitendem Material, z.B. aus Metall, die thermischen Kontakt zur Plattform 111 und über Wärmebrücken 142 direkt zum flüssigen Stickstoff 220 in der ersten Kühleinrichtung 200 aufweisen. Damit wird vorteilhafterweise eine effektive Kühlung bis in die oberen Fächer der Regale 141 gewährleistet.

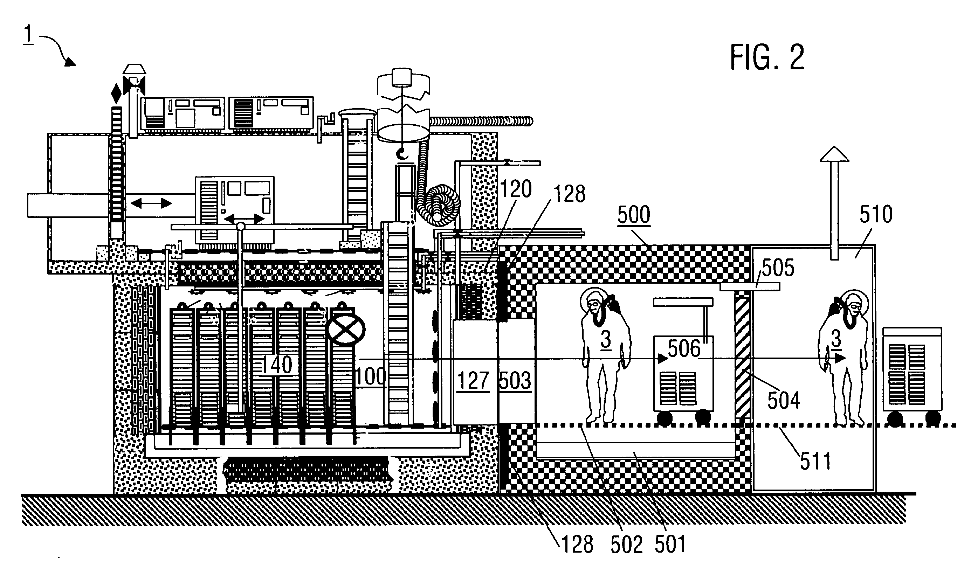

In mindestens einer Seitenwand 120 ist mindestens ein Wandelement 125 enthalten, das in Bezug auf die Seitenwand beweglich ist. Das mindestens eine Wandelement 125 ist ein Teil der Wand, das sich von der Innenseite bis zur Außenseite der Seitenwand 120 erstreckt und über eine Öffnungsfuge 126 mit der umgebenden Seitenwand 120 verbunden ist. Das Wandelement 125 ist von der Seitenwand 120 durch eine Schiebebewegung oder eine Schlageinwirkung trennbar, so dass eine Wandöffnung 127 (siehe Figur 2) erzeugt werden kann. Auf der Außenseite der Seitenwand 120 ist eine schematisch illustrierte Andockeinrichtung 128 für einen mobilen Evakuierungscontainer (siehe Figur 2) angeordnet. Das Wandelement 125 ist im Wesentlichen wie die umgebende Seitenwand 120 aufgebaut. Wenn die Seitenwand 120 z.B. mehrere schichtförmige Wandlagen umfasst, sind diese beim Wandelement 125 ebenfalls vorgesehen. Abweichend von der Illustration in Figur 1 können mehrere Wandelemente 125 zur Bildung von Wandöffnungen in einer oder mehreren der Seitenwände 120 vorgesehen sein.

Das Wandelement 125 ist so dimensioniert, dass die Wandöffnung in der Seitenwand 120 für eine schnelle Evakuierung von Proben 2 und/oder Bedienpersonen 3 aus dem Kühlraum 100 geeignet ist. Das Wandelement 125 kann z.B. einen kreisförmigen Querschnitt mit einem Durchmesser von z.B. 100 cm oder einen rechteckigen Querschnitt mit einer Seitenlänge von 100 cm aufweisen.

Die Seitenwände 120 umfassen vorzugsweise mehrere schichtförmige Wandlagen mit einer inneren Vakuumkomponenten-Lage 121 und einer äußeren Kunststoff-Lage 122. Die Vakuumkomponenten-Lage 121 umfasst eine Schicht aus evakuierten Bauelementen (so genannte "Vakuum-Bauelemente") und eine evakuierte Hohlwand 123. Die evakuierten Bauelemente sind quaderförmig, insbesondere wie herkömmliche Bausteine oder Ziegel für Bauzwecke, gebildet und aus Kunststoff mit einem evakuierten oder evakuierbaren Innenraum hergestellt. Die Hohlwand 123 erstreckt sich über die gesamten Seitenwände 120 oder Teile von diesen. Im Bereich des mindestens einen Wandelements 125 weist die Hohlwand 123 eine Ausnehmung auf. Die Hohlwand 123 ist im Normalbetrieb evakuiert oder optional mit einer kühlenden Flüssigkeit gefüllt. Die Hohlwand 123 hat insbesondere eine vorteilhafte Funktion, falls eine der Kühleinrichtungen ausfällt. Sie kann aus einem zuschaltbaren externen Hilfsbehälter (nicht dargestellt) mit einem Kühlmittel, wie z.B. flüssigem Stickstoff, gefüllt werden, um eine unerwünschte Erwärmung des Kühlraums 100 zu vermeiden. Die Kunststoff-Lage 122 umfasst eine Schicht aus einem Polymer-Schaum, z.B. einem Polyurethan-Schaum. Die Dicke der Kunststoff-Lage 122 kann z.B. im Bereich von 10 cm bis 1 m oder auch oberhalb von 1 m gewählt sein.

Der Deckenbereich 130 umfasst eine Kunststoffschicht, gebildet z.B. aus Polymer-Schaum, in der eine Deckenöffnung 131 gebildet ist. Oberhalb der Deckenöffnung 131 ist der Betriebsraum 400 mit einer Antriebseinrichtung 410 und mechanischen Stellelementen 411 vorgesehen, welche in das Innere des Kühlraums 100 ragen. In Figur 1 ist beispielhaft ein Gestänge mit einer Verschiebeeinheit gezeigt, die mit der Antriebseinrichtung 410 betätigt werden können. Mit der Verschiebeeinheit können Proben in die Regale 141 der Probenaufnahmeeinrichtung eingebracht oder aus diesen entnommen werden. Des Weiteren ist eine Haubenkammer 400.1 (Aufnahmeturm) vorgesehen, in der eine Fördereinrichtung 150 mit einem Seilzug 151 angeordnet ist. In die Haubenkammer 400.1 können Probenaufnahmeeinrichtungen 140, insbesondere die turmartigen Regale 141 bei einer im Betriebsstörung oder bei der Beschickung des Kühlraums 100 überführt werden. Der Seilzug 151 und eine Leiter 152 reichen vom Betriebsraum 400 durch die Deckenöffnung 131 in den Kühlraum 100. Zusätzlich kann der Betriebsraum 400 weitere Betriebseinrichtungen enthalten und/oder mit einer Personen-Schleuseneinrichtung 450 verbunden sein.

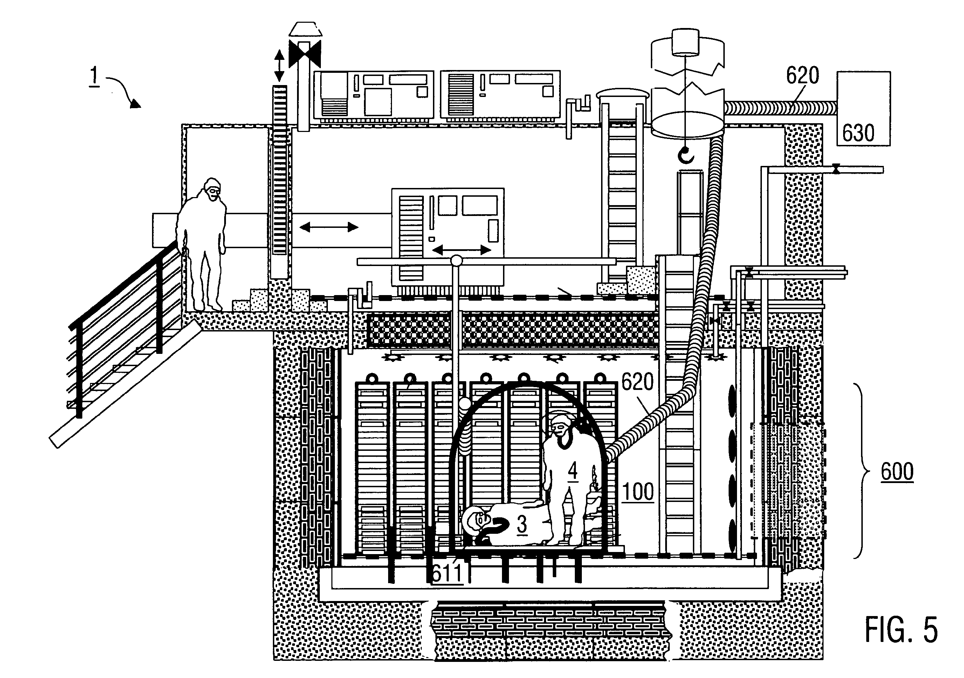

Der Betriebsraum 400 enthält ferner eine Alarmeinrichtung 401, die mit Sensoren im Kühlraum 100 und im Betriebsraum 400 verbunden ist und in Reaktion auf einen unerwünschten Zugriff auf das Innere des Kühlraums 100 ein Alarmsignal erzeugt. Des weiteren befindet sich im Betriebsraum 400 eine flexible Belüftungsleitung 620, die mit einem externen Belüftungssystem 630 verbunden ist. Die Belüftungsleitung 620 kann in den Kühlraum 100 gezogen werden, um dort eine lokale Schutzatmosphäre in einer Haube 610 (siehe Figur 5) zu schaffen.

Zur Begehung des Kühlraums 100 betritt eine Bedienperson durch die Personen-Schleuseneinrichtung 450 den Betriebsraum 400. Zwischen der Personen-Schleuseneinrichtung 450 und dem Betriebsraum 400 ist eine Schleusentür vorgesehen, durch welche die Bedienperson 3 über eine Treppe 457 in den Betriebsraum 400 gelangen kann. Vom Betriebsraum 400 erfolgt die Begehung des Kühlraums 100 durch die Deckenöffnung 131 und über die Leiter 152. Die Bedienperson 3 trägt einen Schutzanzug.

Im Kühlraum 100 und im Betriebraum 400 sind TemperaturSensoren mit verschiedenen Abständen vom Bodenbereich 110 vorgesehen. Diese ermöglichen die Erfassung einer Temperaturverteilung im Kühlraum 100. Bei Bedarf kann durch eine zusätzliche Kühlung mit der zweiten Kühleinrichtung 300 und/oder eine Ventilationseinrichtung (nicht dargestellt) im Kühlraum 100 ein Ausgleich der Temperatur, insbesondere eine Absenkung der Temperatur in den oberen Bereichen des Kühlraums 100 erzielt werden.

Im Kühlraum 100 ist ferner eine Stickstoff-Sprinkler-Anlage 108 vorgesehen. Vorzugsweise befindet sich die Stickstoff-Sprinkler-Anlage 108 an der Unterseite des Deckenbereiches 130. Vorteilhafterweise kann mit der Stickstoff-Sprinkler-Anlage 108 eine schnelle Kühlung bei Erstnutzung des Kühlraums oder bei Ausfall einer Kühleinrichtung erreicht werden. Die Stickstoff-Sprinkler-Anlage 108 wird über Kühlmittelleitungen von der Kühlmittelzufuhr (nicht dargestellt) versorgt. Figur 1 illustriert ein wichtiges Konstruktionsprinzip der Kühlanlage. Sämtliche Versorgungsverbindungen, insbesondere Zuführungen und Öffnungen, in das Innere des Kühlraums 100 erfolgen ausschließlich durch den Deckenbereich 130, d.h. von oben. Damit wird eine Minimierung der Wärmezuführung erreicht. Des Weiteren können im Betriebsraum 400 oder über diesen wärmere Aufsätze für Geräte angeordnet werden, die bei tiefen Temperaturen nicht arbeiten können. Es können insbesondere Kammern mit höherer Temperatur oder sogar mit einer Innenheizung zum Betrieb beweglicher Teile, wie z.B. Motoren, aufgesetzt werden. Da aus der ersten Kühleinrichtung 200 laufend unter deutlicher Volumenzunahme Gas gebildet wird und die Kühlanlage 1 druckfrei, d.h. nicht gasdicht, aufgebaut ist, wird der Kühlraum 100 laufend von unten von Stickstoff durchströmt. Von Bedeutung für den zuverlässigen Betrieb der Kühlanlage 1 ist auch eine möglichst verzögerte Erwärmung im Havariefall, insbesondere bei Ausfall von Kühleinrichtungen. Dies wird insbesondere durch den thermisch isolierenden Aufbau der Seitenwände 120 erreicht.

In der erfindungsgemäßen Kühlanlage zur Kryokonservierung biologischer Proben mit automatisierbaren und im Notfall begehbaren Kühlräumen ist der Havariefall bereits räumlich, über vorbestimmte Einrichtungen und/oder fest vorgegebene Havarieverfahren vorbereitet. Bei Eintreten einer Havarie werden damit ein fester Ablauf und die notwendigen Mittel zur schnellstmöglichen Rettung der Proben und, wenn involviert, von Bedienpersonen im und aus dem betroffenen Kühlraum bereitgestellt. Zum besseren Verständnis des Havariefalles wird zunächst der Normalbetrieb der erfindungsgemäßen Kühlanlage beschrieben.

### 1. Normalbetrieb

Im Normalbetrieb befindet sich die Kühlanlage in einem der Betriebsmodi, welche eine erstmalige Kühlung eines Kühlraums, eine Normalkühlung, eine technische Kontrolle, eine Wartung/Reparatur, einen Standby-Betrieb und eine Auflösung des Probenlagers im Kühlraum umfassen.

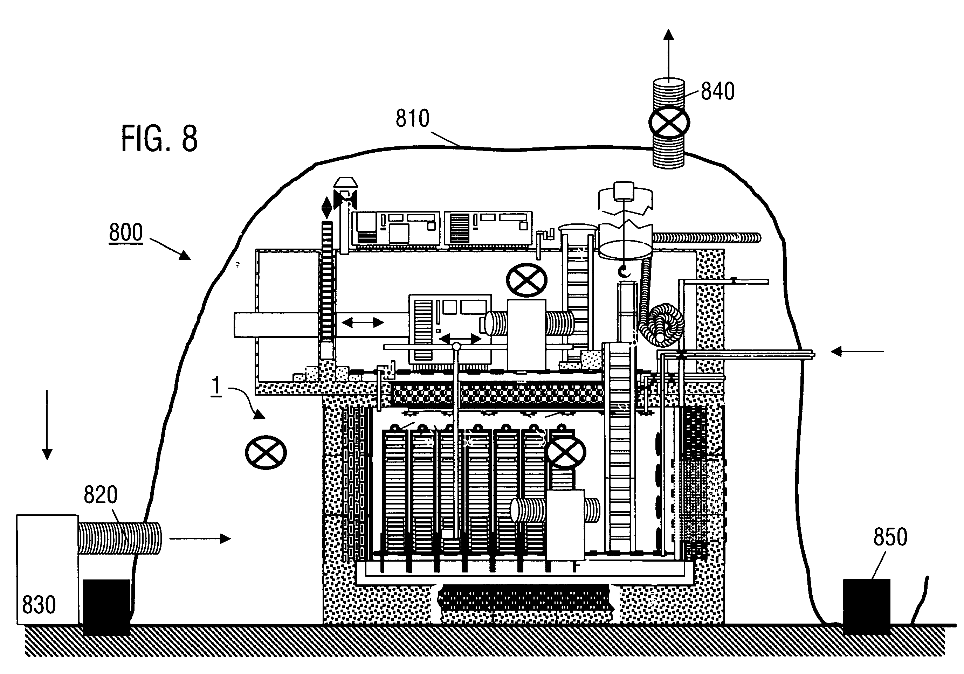

Für die erstmalige Kühlung wird der gesamte Kühlraum mit allen Installationen und eventuellen Vorräumen, z.B. durch Erwärmung oder durch gasdichten Abschluss des Kühlraums gegenüber der Umgebung und Einbringen getrockneter Gase, vollständig getrocknet. Der Abschluss des Kühlraums erfolgt zum Beispiel unter Verwendung einer Hülleneinrichtung, die unten unter Bezug auf Figur 8 beschrieben wird. Danach wird flüssiger Stickstoff in die erste Kühleinrichtung 200 gefüllt. Bei der Abkühlung der ersten Kühleinrichtung 200 entsteht in großer Menge trockenes Stickstoffgas, das die Innenraumluft aus dem Kühlraum nach oben herausdrückt. Dies wird fortgesetzt, bis die erste Kühleinrichtung 200 abgekühlt ist, kein weiteres Stickstoffgas gebildet wird und der Sauerstoffgehalt unter der Hülleneinrichtung verschwindend gering wird. Dann wird Hülleneinrichtung entfernt, und nach der weiteren Kühlung des Kühlraums auf eine Temperatur unter - 140°C kann die Kühlanlage als Lager für Proben in Betrieb genommen werden.

Bei der Normalkühlung wird die erste Kühleinrichtung laufend mit flüssigem Stickstoff aufgefüllt, der verdunstet und die Stickstoffatmosphäre im Kühlraum aufrechterhält. Die Stickstoffatmosphäre hat eine horizontal abgestufte Temperatur im Kühlraum, die im Bodenbereich bei - 190°C und im Deckenbereich bei - 140°C liegt. Das trockene, kühle Stickstoffgas wird vom Kühlraum in die oberen Betriebsräume gedrückt, von denen es in die Umgebung abgelassen wird. Die Einlagerung und Auslagerung von Proben erfolgt während der Normalkühlung automatisch. Wenn mit Kameras im Kühlraum eine unerwünschte Eisablagerungen festgestellt wird, die auf ein Leck in der Seitenwand hinweist, wird das Leck, z. B. durch Einpressen einer Flüssigkeit, die im Leck gefriert, abgedichtet.

Die technische Kontrolle umfasst ein Testen von Sensoren, Kameras und Versorgungselementen der Kühlanlage. Insbesondere zum Testen der Sensoren wird nach einer Phase verminderter Kühlung durch die erste Kühleinrichtung flüssiger Stickstoff nachgefüllt und die daraus folgende Veränderung der Temperatur in der Kühlkammer an den Sensoren verfolgt.

Für die Wartung/Reparatur wird der Kühlraum durch die Bedienperson 3 betreten (siehe Figur 1). Da eine Kryobank in lückenloser Kühlung über Jahrzehnte zu betreiben ist, kann bei der Wartung/Reparatur die Temperatur im Kühlraum nicht angehoben werden. Daher trägt die Bedienperson 3 einen beheizten Schutzanzug mit eigener Gas- und Elektroversorgung. Da der Kühlraum frei von Sauerstoff ist, ist zur Sicherheit der Bedienperson 3 im Kühlraum 100 eine weitere Bedienperson 4 im Schutzanzug im oberen Betriebsraum 400 in Bereitschaft. Beide Bedienpersonen 3, 4 stehen über Funk in Kontakt und werden von außen über Kamerasysteme oder eine dritte Bedienperson 5 im Schutzanzug beobachtet. Mechanische Rettungssysteme (Seilwinden) sind aktiviert und einsatzbereit, die Schutzanzüge sind mit einem Rettungsseil verbunden. Die Innentemperaturen und die Atemluftversorgung wird in den Schutzanzügen über Sensoren erfasst und dem Nutzer wie dem externen Personal mitgeteilt. Bei Unterschreiten von Grenzwerten wird ein Havariezustand erfasst und ggf. Alarm ausgelöst.

Der Standby-Betrieb kann alternativ zu der Normalkühlung vorgesehen sein. Bei Ausfall von Kühleinrichtungen oder Mangel an flüssigem Stickstoff wird der Kühlraum so lange wie möglich kalt gehalten. Dabei werden alle nicht notwendigen Geräte abgeschaltet. Eine Begehung des Kühlraums erfolgt nicht. Alle Öffnungen werden geschlossen. Die Bodenwanne der ersten Kühleinrichtung wird, wenn möglich, durch Anschluss einer zusätzlicher Flüssigstickstoffreserve aufgefüllt. Die elektrische Hilfskühlung wird aktiviert. Der Standby-Betrieb kann einschließen, dass die Temperatur im Kühlraum für einen bestimmten Zeitraum (Tage, Wochen oder Monate) auf - 80°C angehoben wird. Werden beim Standby-Betrieb Grenzwerte, wie z. B. die Temperatur im Kühlraum 100, überschritten, wird ein Havariezustand erfasst und ggf. Alarm ausgelöst.

Die Auflösung eines Probenlagers im Kühlraum umfasst eine vorgegebene Abfolge von Maßnahmen. Im oberen Betriebsraum wird eine Temperatur zwischen - 50°C und - 80°C zu bringen. Die Probenbehälter werden automatisch in diesen Raum befördert und in tiefgekühlten Transportbehältern abgelegt. Um Eisniederschlag zu verhindern, werden diese dann verschlossen und abtransportiert. Wenn erforderlich, kann dieser Vorgang von Bedienpersonen in Schützanzügen im oberen Betriebsraum unterstützt werden.

### 2. Havariezustand

Eine Havarie der Kühlanlage kann im Ergebnis von mindestens einer der folgenden Betriebssituationen auftreten, die einen Ausfall der ersten oder der zweiten Kühleinrichtung durch einen Kühlmittelengpass und/oder durch einen technischen Schaden, einen kompletten Ausfall aller Kühleinrichtungen mit raschem Temperaturanstieg, einen Betriebsfehler eines Schutzanzugs einer Bedienperson, einen Stromausfall/elektrischen Kurzschluss, einen Brand in der Kühlanlage oder der Umgebung, einen Wassereinbruch und ein unbefugtes Betreten/kriminelle Aktionen umfassen.

Bei Stromausfall oder einem elektrischen Kurzschluss besteht bei Stickstoffkühlung kein großes Problem. Vorzugsweise sind eine unterbrechungsfreie Stromversorgung und Notstromaggregate vorgesehen. Ein Brand in der Kühlkammer selbst kann kaum auftreten. Auch in der Geräteetage ist dies nicht möglich, solange die Räume ohne Sauerstoff sind. Ein Problem entsteht typischerweise erst, wenn durch das Belüftungssystem bei Havarie nach Sauerstoff in die Räume gelangt. Für den Fall eines dann entstehenden Brandes werden Trockenlöschmittel in den Räumen der Kühlanlage vorgehalten. Des Weiteren befinden sich Notausschalter in allen Räumen, so dass die eventuelle Kabelbrände leicht unterbunden werden können. Im Falle eines Brandes außerhalb ist lediglich durch die Feuerwehr sicher zu stellen, dass die Kühlraumeinheit, die dicht gegen Wassereindringen ausgeführt sein muss, gekühlt wird, so dass die Wände nicht angegriffen werden können. Diese sollten außen eine Brandschutzverkleidung tragen. Unbefugtes Betreten oder kriminelle Aktionen werden über Sensoren (Bewegungssensoren, IR-Detektoren) und Kameras erfasst, bei Bedarf wird mit der Alarmeinrichtung 401 (siehe Figur 1) Alarm ausgelöst.

Ob im konkreten Fall ein Havariezustand erfasst wird, in dem eine Bedienperson und/oder Proben im Kühlraum Betriebsbedingungen ausgesetzt sind, die von einem vorgegebenen Normzustand abweichen, hängt von der Dauer und Wirkung der jeweiligen Betriebssituation ab.

Die Wirkung des Ausfalls von einer oder mehreren Kühleinrichtungen hängt davon ab, welche der Kühleinrichtungen die Hauptkühlung und das sekundäre Sicherheitskühlsystem im Kühlraum bilden. Wenn die Hauptkühlung ein elektrisches Kühlsystem (zweite Kühleinrichtung in Figur 1) umfasst, ergibt sich bei Stromausfall oder einer anderen Funktionsstörung innerhalb weniger Stunden eine Erwärmung des Kühlraums. Sobald eine kritische Temperatur von zum Beispiel -138°C erreicht ist, muss das sekundäre Sicherheitskühlsystem (erste Kühleinrichtung in Figur 1) in Betrieb genommen werden. Hierzu wird flüssiger Stickstoff in die Bodenwanne 210 gepumpt. Die Zufuhr des flüssigen Stickstoffs erfolgt aus einem Vorratsgefäß außerhalb der Kühlanlage, z.B. aus einem Stickstoff-Tankwagen. Wenn hingegen das Hauptkühlsystem mit flüssigem Stickstoff betrieben wird und das sekundäre Sicherheitskühlsystem eine elektrische Kühlung umfasst, ist ein Ausfall des Hauptkühlsystems, z.B. durch eine Unterbrechung der Zufuhr von flüssigem Stickstoff, weniger kritisch. Solange die Bodenwanne 210 im Kühlraum 100 flüssigen Stickstoff enthält, kann die Betriebstemperatur im Kühlraum z.B. über Tage bis zu einer Woche gehalten werden. Bevor der flüssige Stickstoff 220 aus der Bodenwanne 210 restlos verdampft ist, wird das sekundäre Sicherheitskühlsystem eingeschaltet.

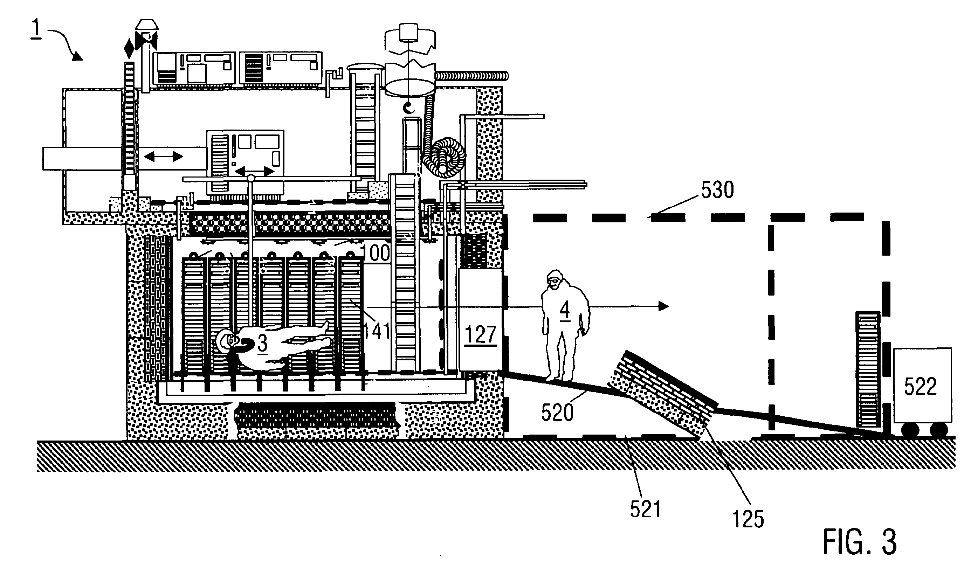

Ein Havariezustand kann auftreten, wenn der Ausfall der Hauptkühlung dauerhaft ist und durch das sekundäre Sicherheitssystem nicht kompensiert werden kann und/oder an der Hauptkühlung oder dem sekundären Sicherheitskühlsystem eine Reparatur erforderlich ist, für die der Kühlraum erwärmt werden muss. Des Weiteren kann ein Havariezustand auftreten, wenn alle Kühleinrichtungen, d.h. die Hauptkühlung und das sekundäre Sicherheitskühlsystem ausfallen und die Temperatur im Kühlraum 100 über - 138 °C zu steigen droht. In diesem Fall ist eine Evakuierung von Proben erforderlich, wie im Folgenden unter Bezug auf die Figuren 2 und 3 erläutert wird.

Zur Evakuierung von Proben aus dem Kühlraum 100 wird an der Außenseite der Seitenwand 120 an der Andockeinrichtung 128 ein Evakuierungscontainer 500 mit einer Evakuierungsschleuse 510 angeordnet (Figur 2). Der Evakuierungscontainer 500 umfasst eine thermisch isolierte Raumeinheit, die zur Wandöffnung 127 hin mit einer Öffnung 503 offen ist und eine Containerwanne 501 zur Aufnahme von flüssigem Stickstoff und eine Tür 504 enthält. Über der Containerwanne 501 ist eine Arbeitsplattform 502, 511 angeordnet, die von der Öffnung 503 durch den Evakuierungscontainer 500 und die Tür 504 in die Evakuierungsschleuse 510 verläuft. Zwischen dem Evakuierungscontainer 500 und der Evakuierungsschleuse 510 ist ein Gasdurchlass 505 vorgesehen, durch den im Evakuierungscontainer 500 entstehendes Stickstoffgas über die Evakuierungsschleuse 510 nach außen abgeleitet wird. Vorteilhafterweise wird damit ein Eindringen feuchter Luft minimiert, so dass Eisniederschläge vermieden werden.

Bei einer Havarie umfasst die Evakuierung von Proben aus dem Kühlraum 100 die folgenden Schritte. Zuerst wird der Evakuierungscontainer 500 auf der Außenseite der Seitenwand 120 positioniert und an der Andockeinrichtung 128 fixiert und abgedichtet. Anschließend wird der Innenraum des Evakuierungscontainers 500 abgekühlt. Mit flüssigem Stickstoff in der Containerwanne 501 wird eine Temperatur unterhalb von -50°C, insbesondere unterhalb von -80°C eingestellt. Anschließend wird durch Entfernung des Wandelements 125 (siehe Figur 1) die Wandöffnung 127 gebildet.

Die Evakuierung der Proben umfasst dann die Entnahme von Proben aus der Probenhalterungseinrichtung 140 im Kühlraum 100 und die Übertragung in einen rollfähigen Kryotank 506 (Dewar-Tank). Hierzu betritt eine Bedienperson 3 im Schutzanzug über die Evakuierungsschleuse 510 und die Tür 504 den Evakuierungscontainer 500 und durch die Wandöffnung 127 den Kühlraum 100. Vorteilhafterweise kann aufgrund der dichten Kopplung zwischen dem Evakuierungscontainer 500 und der Andockeinrichtung 128 die Evakuierung der Proben zeitweilig unterbrochen werden. Die Wandöffnung 127 kann z.B. geschlossen werden, um die Evakuierung zu einem späteren Zeitpunkt fortzusetzen.

Gemäß einer Variante kann der Evakuierungscontainer 500 mit der Außenseite der Seitenwand 120 fest verbunden sein. In diesem Fall können sich Vorteile für die thermische Isolation und Gasdichtheit der Verbindung zwischen dem Kühlraum 100 und dem Evakuierungscontainer 500 ergeben.

Die Betriebsbedingungen in der Kühlanlage können derart sein, dass die Proben oder eine verunglückte Person aus dem Kühlraum 100 instantan entfernt werden müssen. Dies ist z.B. der Fall, wenn im Kühlraum durch einen Brand oder eine mechanische Einwirkung eine Zerstörung der Proben droht und/oder eine Bedienperson im Kühlraum verunglückt ist. Da für diesen Fall die Evakuierung über den Evakuierungscontainer 500 gemäß Figur 2 zu viel Zeit erfordern kann, ist alternativ eine Schnellbergung von Bedienpersonen und Proben vorzunehmen. Bei der Schnellbergung werden Proben und/oder Bedienpersonen ohne Rücksicht auf die Vereisung, jedoch unter Wahrung der Kühlung der Proben aus dem Kühlraum 100 entfernt.

Für die Schnellbergung wird gemäß Figur 3 auf der Außenseite der Seitenwand 120 eine Rampe 520 angeordnet, die von einer Unterkante der Wandöffnung 127 in der Seitenwand 120 zum Boden 521 in der Umgebung der Kühlanlage führt. Die Wandöffnung 127 und die Rampe 520 können von einer Evakuierungsschleuse 530 eingeschlossen sein. Mit der Evakuierungsschleuse 530 kann in der Umgebung der Wandöffnung 127 eine lokal trockene und ggf. auch gekühlte Atmosphäre bereitgestellt werden. Die Evakuierung über die Rampe 520 erfolgt mit den folgenden Schritten.

Nach Erfassung des Havariezustands wird die Rampe 520 an der Außenseite der Seitenwand 120 positioniert. Das Wandelement 125 wird entfernt, so dass die Wandöffnung 127 gebildet wird. Die Entfernung des Wandelements 125 kann durch manuelle Einwirkung, mit einem mechanischen Werkzeug oder durch eine gerichtete Sprengung erfolgen. Die Einwirkung mit dem mechanischen Werkzeug kann z.B. ein Herausschneiden oder ein mechanisches Herausdrücken umfassen.

Eine Hilfsperson 4, die einen Schutzanzug trägt, kann durch die Wandöffnung 127 den Kühlraum 100 betreten, um die verunglückte Bedienperson 3 und/oder die Regale 141 mit den Proben aus dem Kühlraum 100 über die Rampe 520 zu entfernen. Von der Rampe 520 werden die Proben in einen bereitstehenden Kryotank 522 überführt, wo die Proben gesichert sind. Falls der Kühlraum 100 bei Erfassung des Havariezustands mit warmer Luft beaufschlagt werden kann, ist die Verwendung eines Schutzanzugs für die Hilfsperson 4 nicht erforderlich. In diesem Fall genügt es, wenn die Hilfsperson 4 warme Kleidung und einen Gesichtsschutz trägt.

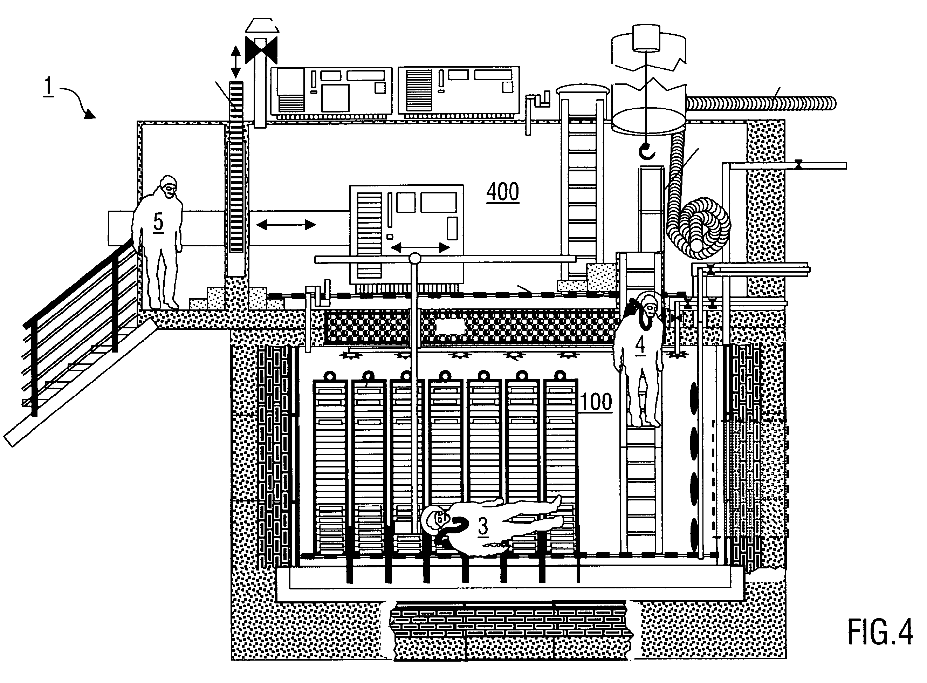

Die Figuren 4 und 5 illustrieren schematisch die Rettung einer Bedienperson 3 im Kühlraum 100 unter Verwendung einer Schutzeinrichtung 600. In einer ersten Variante der Erfindung umfasst die Schutzeinrichtung 600 eine Haube 610, die über eine Belüftungsleitung 620 mit einem externen Belüftungssystem 630 verbunden ist. Die Haube 610 besteht aus einem bei der Betriebstemperatur im Kühlraum flexiblen Material, wie z.B. einer Metallfolie. Im Normalzustand der Kühlanlage befindet sich die Haube 610 in einem zusammengefalteten Zustand im Kühlraum 100. Bei einer Havarie kann die Haube 610 von einer Hilfsperson 4 entfaltet und zum Schutz der verunglückten Bedienperson 3 verwendet werden, wie im Folgenden beschrieben wird.

Eine Bedienperson 3 kann im Kühlraum 100 z.B. einen Schwächeanfall, eine Verletzung oder eine Beeinträchtigung durch einen Betriebsfehler des Schutzanzugs, Lichtausfall oder eine Angstattacke erfahren. Die Bedienperson 3 liegt im Bodenbereich des Kühlraums 100, ohne sich selbst helfen zu können. Wenn dieser Havariezustand erfasst wird, steigt eine erste Hilfsperson 4 vom Betriebsraum 400 über eine Leiter in den Kühlraum 100 ab, während eine zweite Hilfsperson 5 zur Sicherheit bereitsteht.

Zunächst stellt die erste Hilfsperson 4 die Ursache des Havariezustands fest. Der Grad der Einschränkung der Bedienperson 3 wird an die zweite Hilfsperson 5 und ggf. weitere Hilfspersonen außerhalb der Kühlanlage übermittelt. Wenn der Havariezustand durch einen Betriebsfehler des Schutzanzugs der Bedienperson 3 verursacht ist, kann die Hilfsperson 4 vorübergehend die Versorgungseinheit des eigenen Schutzanzugs mit dem Schutzanzug der Bedienperson 3 koppeln.

Befindet sich die Bedienperson 3 in Lebensgefahr, z.B. durch den Ausfall von wesentlichen Funktionen des Schutzanzugs, müssen die ungünstigen Betriebsbedingungen im Kühlraum 100 in Bezug auf die Bereitstellung von Atemluft und die Erhöhung der Temperatur sofort, z.B. innerhalb von einer Minute, geändert werden. Hierzu wird die Haube 610 verwendet. Die Hilfsperson 4 breitet die Haube 610 über der Bedienperson 3 aus. Falls verfügbar kann zuvor eine Isoliermatte 611 auf dem Bodenbereich ausgebreitet werden, um die Schaffung einer lokalen Atmosphäre zu vereinfachen. Die Haube 610 wird über die Belüftungsleitung 620 mit dem externen Belüftungssystem 630 gekoppelt. Dieses enthält einen Ventilator und eine Heizeinrichtung. Mit dem externen Belüftungssystem 630 wird erwärmte Atemluft in das Innere der Haube 610 geblasen. Bei hohem Luftdurchsatz erwärmt sich die lokale Atmosphäre so schnell, dass die Bedienperson 3 von ihrem Schutzanzug befreit werden kann. Bei Verwendung von trockener Luft treten keine Nebel auf, und der Schutzhelm der Bedienperson 3 kann geöffnet werden.

Wenn die Bedienperson 3 nach einer Erholung bewegungsfähig ist, kann sie nach erneutem Anlegen des Schutzanzugs den Kühlraum 100 über die Leiter verlassen. Wenn die Bedienperson 3 hingegen nicht beweglich ist, verbleibt die Bedienperson 3 zunächst unter der Haube 610, bis weitere Hilfspersonen im Kühlraum 100 anwesend sein können, um einen Abtransport durch die Deckenöffnung, ggf. unter Verwendung des Seilzugs 151 durchzuführen.

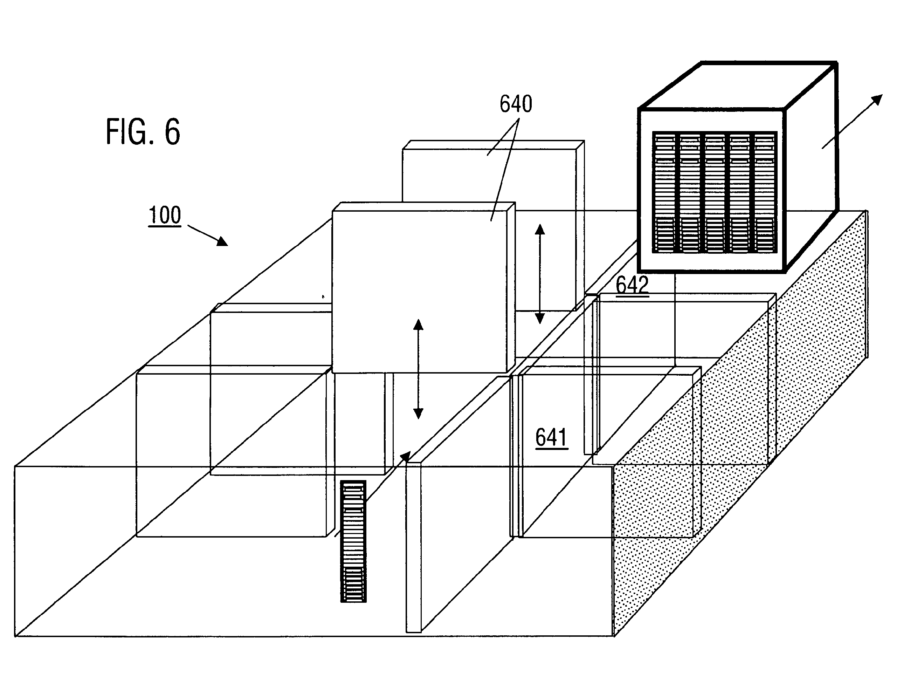

Gemäß einer abgewandelten Variante der Erfindung kann die Schutzeinrichtung zur Schaffung einer lokalen Schutzatmosphäre im Kühlraum 100 verschiebbare Zwischenwände 640 umfassen, wie schematisch in Figur 6 illustriert ist. Der Kühlraum 100 ist mit einem System von Zwischenwände 640 ausgestattet, die von oben, z.B. aus dem Betriebsraum 400 (siehe Figur 1) in den Kühlraum 100 eingeschoben werden können. Mit den Zwischenwänden 640 können einzelne Kammern 641 gebildet werden, die über eine Belüftungsleitung mit einem externen Belüftungssystem (nicht dargestellt) koppelbar sind.

Die Segmentierung des Kühlraums 100 durch die Zwischenwände 640 erlaubt auch eine vereinfachte Evakuierung von Proben aus dem Kühlraum 100. Beispielsweise kann vorgesehen sein, dass mit den Zwischenwänden 640 Bereiche, wie z.B. die Kammer 642, vom übrigen Kühlraum 100 thermisch isoliert abgetrennt werden. Anschließend können aus den abgetrennten Bereichen Proben durch Herausheben, z.B. durch die Deckenöffnung 131 (siehe Figur 1) evakuiert werden. Im Falle von Kühlraumsystemen mit mehreren hintereinander oder umeinander angeordneten Kühlräumen können die Proben als Regal oder einzeln schnell und einfach horizontal verschoben werden, während ein Hochziehen und Absenken der Zwischenwände 640 erfolgt, bis sich die Proben in der Kammer 642 befinden. Die Gesamtevakuierung kann dann aus der Kammer 642 erfolgen, die z.B. komplett mit den Proben entfernt (herausgehoben, verschoben, abtransportiert) werden kann.

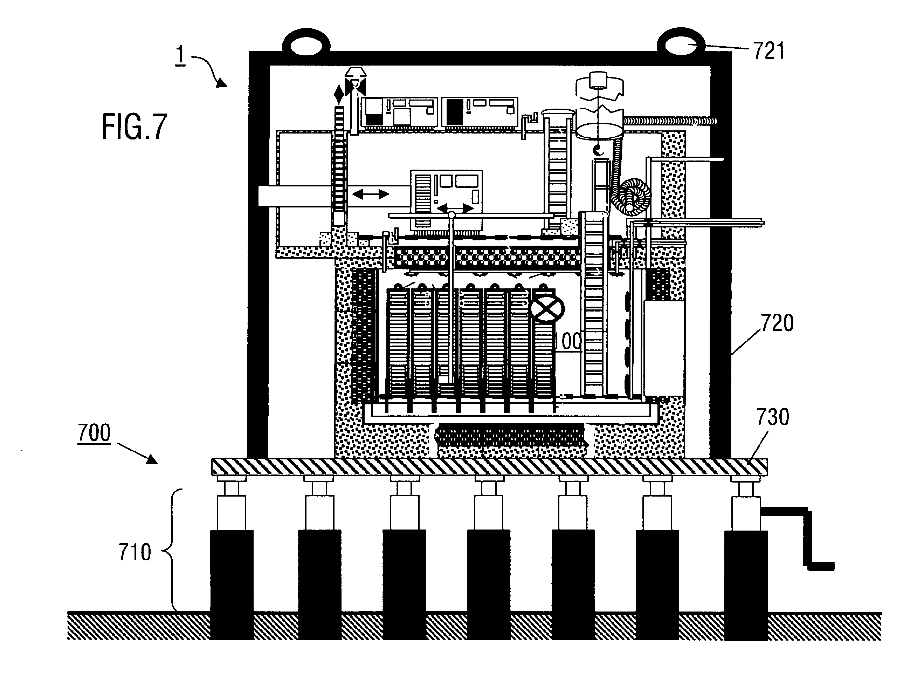

Figur 7 illustriert in schematischer Schnittansicht eine Kühlanlage 1, die mit einer Hubeinrichtung 700 ausgestattet ist. Die Kühlanlage 1 ist mit einem massiven Rahmen 720 und einer Basisplatte 730 versehen. Mit der Hubeinrichtung 700 kann die Betriebshöhe des Kühlraums 100 verändert werden, beispielsweise um die Kühlanlage 1 gegen Hochwasser zu schützen. Die Hubeinrichtung 700 umfasst z.B. einen hydraulisch betriebenen Träger 710 und/oder einen Kran (nicht dargestellt). Mit dem hydraulisch betriebenen Träger 710 kann die Basisplatte 730 angehoben werden. Der Rahmen 720 ist mit Eingriffselementen 721 ausgestattet, welche das Anheben der Kühlanlage 1 mit einem Kran erlauben.

Das Anheben der Kühlanlage 1 mit dem Kran wird bevorzugt, wenn die Kühlanlage 1 die Dimensionen eines Standard-Transportcontainers hat. Andernfalls erfolgt das Anheben mit dem hydraulisch betriebenen Träger 710, der für eine Hubhöhe im Bereich von z. B. 1 bis 2 Meter eingerichtet ist. Alternativ kann ein Anheben von Teilen des Kühlraums, wie z. B. die Kammer 642 (siehe Figur 6), mit dem Kran vorgesehen sein.

Figur 8 illustriert schematisch eine Hülleneinrichtung 800, mit der eine Anlagen-Schutzatmosphäre erzeugt werden kann. Die Hülleneinrichtung 800 ist konfiguriert, die gesamte Kühlanlage mit einer Schutzatmosphäre zu beaufschlagen. Mit der Hülleneinrichtung 800 kann z.B. ein Schutz gegen von oben eindringendes Wasser und/oder andere Wettererscheinungen bereitgestellt werden.

Die Hülleneinrichtung 800 umfasst eine gasdichte, flexible Folie 810, die über eine Luftzufuhr 820 mit einer Belüftungseinrichtung 830 verbunden und mit Fixierelementen 850 am Boden in der Umgebung der Kühlanlage 1 fixiert ist. Zugeführte Luft kann über einen Luftauslass 840 abfließen. Die Folie 810 besteht z.B. aus Kunststoff, wie z. B. Polyolefin (wie Polyethylen), Polypropylen oder Polycarbonat, als Einzelschicht oder als Mehrschichtverbundfolie.

Die Erfindung ist in den Ansprüchen definiert.

## Patentansprüche

1. Kühlanlage (1), insbesondere zur Kryokonservierung biologischer Proben (2), umfassend:
- einen Kühlraum (100), der von einem Bodenbereich (110), Seitenwänden (120) und einem Deckenbereich (130) begrenzt wird und so dimensioniert ist, dass mindestens eine Bedienperson (3) den Kühlraum (100) betreten kann, und
- eine Kühleinrichtung (200), die zur Kühlung des Kühlraums (100) mit flüssigem Stickstoff (220) vorgesehen ist, wobei
- mindestens eine der Seitenwände (120) mindestens ein vorbestimmtes Wandelement (125) enthält, das ein Teilbereich der mindestens einen der Seitenwände (120) und relativ zu der zugehörigen Seitenwand (120) so beweglich ist, dass in der Seitenwand (120) eine Wandöffnung (127) gebildet werden kann, und
- die mindestens eine Seitenwand (120) und das mindestens eine Wandelement (125), das in der jeweiligen Seitenwand (120) vorgesehen ist, in Dickenrichtung der Seitenwand (120) den gleichen Aufbau aufweisen,
**dadurch gekennzeichnet, dass**
- im Kühlraum (100) eine Schutzeinrichtung (600) vorgesehen ist, die zur Erzeugung einer lokalen Schutzatmosphäre in einer Umgebung einer Bedienperson (3) konfiguriert ist, wobei
- die Schutzeinrichtung (600) eine im Kühlraum (100) bewegliche Haube (610) oder bewegliche, in den Kühlraum (100) verschiebbare Zwischenwände (640), mit denen eine Kammer (641, 642) im Kühlraum (100) herstellbar ist, umfasst,
- ein externes Belüftungssystem (630) vorgesehen ist, das zur Beaufschlagung des Inneren der Haube (610) oder der Kammer (641, 642) mit erwärmter Luft eingerichtet ist, und
- die Haube (610) oder die Kammer (641, 642) über eine Belüftungsleitung (620) mit dem externen Belüftungssystem (630) verbunden ist.

2. Kühlanlage gemäß Anspruch 1, bei der das mindestens eine Wandelement (125)
- ein lösbares Wandmodul der Seitenwand (120) ist,
- senkrecht zu der Seitenwand (120) verschiebbar ist,
- manuell durch eine Bedienperson (3) beweglich ist, und/oder
- von der Seitenwand (120) trennbar ist.

3. Kühlanlage gemäß einem der vorhergehenden Ansprüche, bei der auf einer Außenseite der Seitenwand (120) mit dem mindestens einen Wandelement (125) vorgesehen ist:
- eine Andockeinrichtung (128) für einen Evakuierungscontainer (500), und/oder
- eine Rampe (520), die von der Unterkante des Wandelements (125) oder der Wandöffnung (127) zu einem Boden in der Umgebung der Kühlanlage (1) abfällt.

4. Kühlanlage gemäß Anspruch 3, bei der
- die Andockeinrichtung (128) für eine thermisch isolierte und in Bezug auf eine Umgebung der Kühlanlage (1) gasdichte Verbindung des Kühlraums (100) mit dem Evakuierungscontainer (500) konfiguriert ist.

5. Kühlanlage gemäß einem der vorhergehenden Ansprüche, bei der
- im Kühlraum (100) eine Alarmeinrichtung (401) vorgesehen ist, die zur Erzeugung eines Alarms in Reaktion auf einen unerwünschten Zugriff auf das Innere des Kühlraums (100) konfiguriert ist.

6. Kühlanlage gemäß einem der vorhergehenden Ansprüche, bei der
- die Schutzeinrichtung (600) mit einer Isoliermatte (611) ausgestattet ist, mit der die Bedienperson (3) gegenüber dem Bodenbereich (110) thermisch isolierbar ist.

7. Kühlanlage gemäß einem der vorhergehenden Ansprüche, die umfasst
- eine Hubeinrichtung (700), die für eine Änderung der Betriebshöhe des Kühlraums (100) oder von Teilen von diesem relativ zu einem Boden in der Umgebung der Kühlanlage (1) eingerichtet ist.

8. Kühlanlage gemäß Anspruch 7, bei der
- die Hubeinrichtung (700) einen Kran und/oder einen hydraulisch betriebenen Träger (710) umfasst.

9. Kühlanlage gemäß einem der vorhergehenden Ansprüche, bei der
- eine Hülleneinrichtung (800) vorgesehen ist, die zur Erzeugung einer Anlagen-Schutzatmosphäre konfiguriert ist, welche die Kühlanlage (1) umgibt.

10. Verfahren zum Betrieb einer Kühlanlage (1) gemäß einem der vorhergehenden Ansprüche, mit den Schritten:
- Erfassung eines Havariezustandes der Kühlanlage (1), in dem eine Bedienperson (3) im Kühlraum (100) Betriebsbedingungen ausgesetzt sind, die von einem vorgegebenen Normzustand abweichen, und
- Erzeugung der lokalen Schutzatmosphäre in der Umgebung der Bedienperson (3) im Kühlraum mit der Schutzeinrichtung (600), um die Bedienperson Betriebsbedingungen auszusetzen, welche dem Normzustand gleich sind.

11. Verfahren gemäß Anspruch 10, ferner umfassend mindestens einen der Schritte:
- Bildung einer Wandöffnung (127) in mindestens einer der Seitenwände (120) und Evakuierung der Bedienperson und/oder der Proben durch die Wandöffnung (127) aus dem Kühlraum (100),
- Änderung der Betriebshöhe des Kühlraums (100) oder von Teilen von diesem relativ zu einem Boden in der Umgebung der Kühlanlage (1) mit der Hubeinrichtung (700), und
- Erzeugung einer Anlagen-Schutzatmosphäre, welche die Kühlanlage (1) umgibt, mit der Hülleneinrichtung (800).

12. Verfahren gemäß Anspruch 11, bei dem die Bildung der Wandöffnung (127) und die Evakuierung der Bedienperson (3) und/oder der Proben (2) umfasst:
- Transport der Proben (2) durch die Wandöffnung (127) in den Evakuierungscontainer (500) mit einem Dewar-Gefäß.

13. Verfahren gemäß Anspruch 10, bei dem die Erzeugung der lokalen Schutzatmosphäre umfasst:
- Abdeckung der Bedienperson (3) mit der flexiblen, im Kühlraum beweglichen Haube (610) oder Bildung einer die Bedienperson aufnehmenden Kammer (641, 642) mit den beweglichen, in den Kühlraum verschiebbaren Zwischenwänden (640), und
- Beaufschlagung des Inneren der Haube (610) oder der Kammer (641, 642) mit erwärmter Luft.

14. Verfahren gemäß Anspruch 11, bei dem
- die Betriebshöhe des Kühlraums (100) mit einem Kran und/oder einem hydraulisch betriebenen Träger (710) geändert wird.

15. Verfahren gemäß Anspruch 11, bei dem die Erzeugung der Anlagen-Schutzatmosphäre umfasst:
- Abdeckung der Kühlanlage (1) mit einer gasdichten Folie (810), und
- Beaufschlagung des von der gasdichten Folie (810) abgedeckten Raumes mit erwärmter Luft.

## Claims

1. A cooling system (1), in particular for cryopreservation of biological samples (2), comprising:
- a cooling chamber (100), which is delimited by a floor area (110), side walls (120) and a ceiling area (130) and which is dimensioned such that at least one operator (3) can enter the cooling chamber (100), and
- a cooling device (200), which is provided for cooling of the cooling chamber (100) with liquid nitrogen (220), wherein
- at least one of the side walls (120) contains at least one predetermined wall element (125), that is a subregion of the at least one of the side walls (120) and that is movable relative to the associated side wall (120) such that a wall opening (127) can be formed in the side wall (120), and
- the at least one side wall (120) and the at least one wall element (125), which is provided in the respective side wall (120), have an equal structure along a thickness direction of the side wall (120)
**characterized in that**
- a protection device (600), which is configured for creating a local protective atmosphere in an environment of an operator (3), is provided for in the cooling chamber (100), wherein
- the protection device (600) comprises a hood (610), which is movable in the cooling chamber (100) or movable partition walls (640), which are shiftable in the cooling chamber (100), with which a chamber (641, 642) can be created in the cooling chamber (100),
- an external ventilation system (630) is provided for, which is adapted for impingement of the interior the hood (610) or the interior the chamber (641, 642) with warmed-up air, and
- the hood (610) or the chamber (641, 642) is connected via a ventilation line (620) with the external ventilation system (630).

2. The cooling system according to claim 1, in which the at least one wall element (125)
- is a detachable wall module of the side wall (120),
- is shiftable perpendicular to the side wall (120),
- can be manually moved by an operator (3), and/or
- can be separated from the side wall (120).

3. The cooling system according to one of the preceding claims, in which are provided on an external side of the side wall (120) with the at least one wall element (125):
- a docking device (128) for an evacuation container (500), and/or
- a ramp (520), which falls off from the bottom edge of the wall element (125) or the wall opening (127) onto a floor in the surroundings of the cooling system (1).

4. The cooling system according to claim 3, in which
- the docking device (128) is configured for a thermally insulated and gas-tight connection of the cooling chamber (100) with the evacuation container (500) relative to an environment of the cooling system (1).

5. The cooling system according to one of the preceding claims, in which
- an alarm device (401), which is configured for generating an alarm in reaction to any undesirable access to the interior of the cooling chamber (100), is provided for in the cooling chamber (100).

6. The cooling system according to one of the preceding claims, in which
- the protection device (600) is provided with an insulating mat (611) with which the operator (3) can be thermally insulated against the floor area (110).

7. The cooling system according to one of the preceding claims, which comprises
- a lifting device (700), which is adapted for changing the operating height of the cooling chamber (100) or of parts of it relative to a floor in the environment of the cooling system (1).

8. The cooling system according to claim 7, in which
- the lifting device (700) comprises a crane and/or a hydraulically operated carrier (710).

9. The cooling system according to one of the preceding claims, in which
- a shell device (800), which is configured for creating a system's protective atmosphere, which surrounds the cooling system (1), is provided for.

10. A method for operating a cooling system (1) according to one of the preceding claims, with the steps of:
- detecting a state of average of the cooling system (1) in which an operator (3) is exposed in the cooling chamber (100) to operating conditions, which differ from a predetermined normal state, and
- creating the local protective atmosphere in the environment of the operator (3) in the cooling chamber with the protection device (600), in order to expose the operator to operating conditions, which are equivalent to the normal state.

11. The method according to claim 10, further comprising at least one of the steps:
- forming a wall opening (127) in at least one of the side walls (120) and evacuation of the operator and/or the samples through the wall opening (127) from the cooling chamber (100),
- changing the operating height of the cooling chamber (100) or of parts of it relative to a floor in the environment of the cooling system (1) using the lifting device (700), and/or
- creating a system's protective atmosphere, which surrounds the cooling system (1), with the shell device (800).

12. The method according to claim 11, in which the formation of the wall opening (127) and the evacuation of the operator (3) and/or the samples (2) comprise:
- transporting the samples (2) through the wall opening (127) into the evacuation container (500) using a Dewar flask.

13. The method according to claim 10, in which the creation of the local protective atmosphere comprises:
- covering the operator (3) with the flexible hood (610), which is movable in the cooling chamber or formation of a chamber (641, 642) accommodating the operator with the movable partition walls (640), which are shiftable in the cooling chamber, and
- impingement of the interior of the hood (610) or the chamber (641, 642) with warmed-up air.

14. The method according to claim 11, in which
- the operating height of the cooling chamber (100) is changed with a crane and/or a hydraulically operated carrier (710).

15. The method according to claim 11, in which the creation of the system's protective atmosphere comprises:
- covering the cooling system (1) with a gas-tight foil (810), and
- impingement of the space covered by the gas-tight foil (810) with warmed-up air.

## Revendications

1. Installation frigorifique (1), destinée en particulier à la cryoconservation d'échantillons biologiques (2), comprenant :
- une chambre frigorifique (100) qui est limitée par une zone de sol (110), des parois latérales (120) et une zone de plafond (130) et est dimensionnée de telle sorte qu'au moins un opérateur (3) peut entrer dans la chambre frigorifique (100), et
- un dispositif frigorifique (200) qui est prévu pour le refroidissement de la chambre frigorifique (100) avec de l'azote liquide (220), dans laquelle
- au moins l'une des parois latérales (120) contient au moins un élément de paroi (125) prédéterminé, une zone partielle de l'au moins une paroi latérale (120) et par rapport à la paroi latérale (120) correspondante est mobile de telle sorte que dans la paroi latérale (120), une ouverture de paroi (127) peut être formée, et
- l'au moins une paroi latérale (120) et l'au moins un élément de paroi (125) qui est prévu dans la paroi latérale (120) respective présentent dans la direction de l'épaisseur de la paroi latérale (120) la même structure,
**caractérisée en ce que**
- dans la chambre frigorifique (100), un dispositif de protection (600) est prévu, qui est configuré pour générer une atmosphère protectrice locale dans un environnement d'un opérateur (3), dans laquelle
- le dispositif de protection (600) comprend un capot (610) mobile dans la chambre frigorifique (100) ou des parois intermédiaires (640) mobiles pouvant coulisser dans la chambre frigorifique (100), avec lesquelles une enceinte (641, 642) peut être réalisée dans la chambre frigorifique (100),
- un système d'aération externe (630) est prévu, qui est aménagé pour alimenter en air chauffé l'intérieur du capot (610) ou de l'enceinte (641, 642), et
- le capot (610) ou l'enceinte (641, 642) est relié(e) par une conduite d'aération (620) avec le système d'aération externe (630).

2. Installation frigorifique selon la revendication 1, dans laquelle l'au moins un élément de paroi (125)
- est un module de paroi détachable de la paroi latérale (120),
- peut être décalé verticalement par rapport à la paroi latérale (120),
- peut être déplacé manuellement par un opérateur (3), et/ou
- est séparable de la paroi latérale (120).

3. Installation frigorifique selon l'une des revendications précédentes, dans laquelle sur un côté extérieur de la paroi latérale (120) avec l'au moins un élément de paroi (125) est prévu :
- un dispositif de jonction (128) pour un conteneur d'évacuation (500) et/ou
- une rampe (520) qui descend du bord inférieur de l'élément de paroi (125) ou de l'ouverture de paroi (127) jusqu'à un sol dans l'environnement de l'installation frigorifique (1).

4. Installation frigorifique selon la revendication 3, dans laquelle
- le dispositif de jonction (128) est configuré pour une liaison de l'installation frigorifique (100) thermiquement isolée et étanche aux gaz relativement à un environnement de l'installation frigorifique (1) avec le conteneur d'évacuation (500).

5. Installation frigorifique selon l'une des revendications précédentes, dans laquelle
- dans la chambre frigorifique (100), un dispositif d'alarme (401) est prévu, qui est configuré pour générer une alarme en réaction à un accès indésirable à l'intérieur de la chambre frigorifique (100).

6. Installation frigorifique selon l'une des revendications précédentes, dans laquelle
- le dispositif de protection (600) est équipé d'un tapis isolant (611) avec lequel l'opérateur (3) peut être thermiquement isolé de la zone de sol (110).

7. Installation frigorifique selon l'une des revendications précédentes, qui comprend
- un dispositif de levage (700) qui est aménagé pour une modification de la hauteur fonctionnelle de la chambre frigorifique (100) ou de parties de celle-ci par rapport à un sol dans l'environnement de l'installation frigorifique (1).

8. Installation frigorifique selon la revendication 7, dans laquelle
- le dispositif de levage (700) comprend une grue et/ou un support (710) actionné de façon hydraulique.

9. Installation frigorifique selon l'une des revendications précédentes, dans laquelle
- un dispositif de gainage (800) est prévu, qui est configuré pour générer une atmosphère protectrice de l'installation qui entoure l'installation frigorifique (1).

10. Procédé pour le fonctionnement d'une installation frigorifique (1) selon l'une des revendications précédentes, avec les étapes de :
- détermination d'un état d'avarie de l'installation frigorifique (1), dans lequel un opérateur (3) est exposé dans la chambre frigorifique (100) à des conditions de fonctionnement qui divergent d'un état normal prédéterminé, et
- génération de l'atmosphère protectrice locale dans l'environnement de l'opérateur (3) dans la chambre frigorifique avec le dispositif de protection (600) pour exposer l'opérateur à des conditions de fonctionnement qui sont conformes à l'état normal.

11. Procédé selon la revendication 10, comprenant en outre au moins l'une des étapes de :
- formation d'une ouverture de paroi (127) dans au moins l'une des parois latérales (120) et évacuation de l'opérateur et/ou des échantillons par l'ouverture de paroi (127) hors de la chambre frigorifique (100),
- modification de la hauteur fonctionnelle de la chambre frigorifique (100) ou de parties de celle-ci par rapport à un sol dans l'environnement de l'installation frigorifique (1) avec le dispositif de levage (700), et
- génération d'une atmosphère protectrice de l'installation qui entoure l'installation frigorifique (1) avec le dispositif de gainage (800).

12. Procédé selon la revendication 11, dans lequel la formation de l'ouverture de paroi (127) et l'évacuation de l'opérateur (3) et/ou des échantillons comprend :
- le transport des échantillons (2) par l'ouverture de paroi (127) dans le conteneur d'évacuation (500) avec un récipient Dewar.

13. Procédé selon la revendication 10, dans lequel la génération de l'atmosphère protectrice locale comprend :
- le recouvrement de l'opérateur (3) avec le capot (610) flexible mobile dans la chambre frigorifique ou formation d'une enceinte (641, 642) recevant l'opérateur avec les parois intermédiaires (640) mobiles pouvant coulisser dans la chambre frigorifique, et
- alimentation de l'intérieur du capot (610) ou de l'enceinte (641, 642) avec de l'air chauffé.

14. Procédé selon la revendication 11, dans lequel
- la hauteur fonctionnelle de la chambre frigorifique (100) est modifiée avec une grue et/ou un support (710) actionné de façon hydraulique.

15. Procédé selon la revendication 11, dans lequel la génération de l'atmosphère protectrice de l'installation comprend :
- le recouvrement de l'installation frigorifique (1) avec un film étanche aux gaz (810), et
- l'alimentation de l'espace recouvert par le film étanche au gaz (810) avec de l'air chauffé.
